# EUROPÄISCHE PATENTANMELDUNG

(11) **EP 3 926 369 A1**
(43) Veröffentlichungstag der Anmeldung: **22.12.2021**
(21) Anmeldenummer: 20181068.6
(22) Anmeldetag: 19.06.2020
(51) Int. Cl.: G01W 1/08, G01W 1/10, G01S 13/95, G01W 1/00

(54) **VERFAHREN ZUR ERHÖHUNG DER GENAUIGKEIT LOKALER WETTERVORHERSAGEN**

(71) Anmelder: Fraunhofer-Gesellschaft zur Förderung der angewandten Forschung e.V., 80686 München (DE)
(72) Erfinder: Valdes Crespi, Ferran, 53343 Wachtberg (DE)
(74) Vertreter: Gagel, Roland

(57) **Zusammenfassung**

Die vorliegende Erfindung betrifft ein Verfahren zur Erhöhung der Genauigkeit lokaler Wettervorhersagen, bei dem mit den Wetterradargeräten in Verkehrsflugzeugen (4) Wetterdaten erfasst und während des Fluges über eine Datenverbindung an eine oder mehrere Bodenstationen übermittelt werden. Die Wetterdaten werden dann zusammen mit der entsprechenden Zeit- und Ortsinformation den Wetterdiensten zur Verfügung gestellt, um darauf basierend lokale Wettervorhersagen zu erstellen. Das Verfahren ermöglicht die Erstellung von Wettervorhersagen mit verbesserter räumlicher und zeitlicher Auflösung.

## Beschreibung

### Technisches Anwendungsgebiet

Die vorliegende Erfindung betrifft ein Verfahren zur Erhöhung der Genauigkeit lokaler Wettervorhersagen. Wetterextreme haben in den letzten Jahren vielfach zu Zerstörungen geführt und auch den Tod von Menschen verursacht. Vor allem die Vorhersage von schweren lokalen Regenfällen ist oft hinsichtlich Zeit und Ort zu ungenau. Dies gilt auch für Wettervorhersagen für die jeweiligen Flugrouten von Flugzeugen, insbesondere über der offenen See, da die bodengestützten Wetterradare immer nur einen kleinen lokalen Bereich abdecken und satellitengestützte Radare nur eine geringe örtliche Auflösung haben. Flugzeuge sind daher in der Regel auf ihr eigenes Wetterradargerät angewiesen.

### Stand der Technik

Derzeit werden für Wettervorhersagen entweder bodengestützte Radarstationen oder satellitengestützte Radare eingesetzt. Das Wetter in Deutschland wird bspw. derzeit durch 17 bodengestützte Radarstationen erfasst, die über das Land verteilt sind. Die Radardaten aller Standorte werden einem zentralen Großrechner übermittelt, der aus den lokalen Radarbildern ein deutschlandweites Gesamtbild errechnet, auf dessen Basis die lokalen Wettervorhersagen dann generiert werden. Die einzelnen Wetterradargeräte liefern dabei neben Daten über die Niederschlagsverteilung mit entsprechend hoher räumlicher und zeitlicher Auflösung gleichzeitig Informationen über die Art der Niederschlagsteilchen. Beim sog. Nowcasting wird aus den erhaltenen Daten eine Kurzfristvorhersage für die nächsten Stunden erstellt. Die hierbei erhaltenen Vorhersagen über schwere Regenfälle sind allerdings hinsichtlich der räumlichen und zeitlichen Auflösung noch sehr ungenau.

Aus der US 6501392 B2 ist ein Verfahren zur Verbesserung der Wetterinformation für den Flugverkehr bekannt, bei dem Wetterdaten der Wetterradargeräte von Flugzeugen während des Fluges über eine Datenverbindung an eine oder mehrere Bodenstationen übermittelt werden. In den Bodenstationen werden diese Wetterdaten mit Wetterdaten aus anderen Quellen verknüpft, um daraus verbesserte Wetterinformationen für die Flugzeuge zu generieren. Diese verbesserten Wetterinformationen werden dann wiederum über die Datenverbindung an das jeweilige Flugzeug übermittelt. Dadurch können verbesserte Wetterinformationen für die jeweilige Flugroute des Flugzeugs in Echtzeit bereitgestellt werden.

Die Aufgabe der vorliegenden Erfindung besteht darin, ein Verfahren zur Erhöhung der Genauigkeit von lokalen Wettervorhersagen anzugeben, das die Vorhersage insbesondere von starken Regenfällen mit höherer zeitlicher und räumlicher Auflösung ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen.

Bei dem vorgeschlagenen Verfahren werden zur Erhöhung der Genauigkeit lokaler Wettervorhersagen Wetterdaten von Wetterradargeräten in Verkehrsflugzeugen genutzt. Hierzu werden die Wetterdaten, die von den Wetterradargeräten in Verkehrsflugzeugen während des Flugs erhalten werden, zusammen mit einer Zeit- und Ortsinformation während des Flugs über eine Datenverbindung an eine oder mehrere Bodenstationen übermittelt, von denen die Wetterdaten zusammen mit der jeweiligen Zeit- und Ortsinformation einem oder mehreren Wettervorhersagediensten zur Erstellung der lokalen Wettervorhersagen zur Verfügung gestellt werden.

Unter Verkehrsflugzeugen werden hierbei Flugzeuge verstanden, die von Fluggesellschaften, Frachtfluggesellschaften und Privatbetreibern im öffentlichen Verkehr betrieben werden und deren hauptsächlicher Einsatzzweck der kommerziell ausgerichtete Transport von Passagieren oder Frachtgut ist. Bei dem vorgeschlagenen Verfahren wird ausgenutzt, dass Passagier- und Cargoflugzeuge bereits standardmäßig mit Wetterradargeräten bestückt sind. Durch Übermittlung der von den Flugzeugen erfassten Wetterdaten an die Bodenstationen und Nutzung dieser Wetterdaten für die lokalen Wettervorhersagen stehen zusätzliche Informationsquellen zur Verfügung, die die Genauigkeit der lokalen Wettervorhersagen deutlich verbessern. Während die bisher eingesetzten bodengestützten Wetterradargeräte in der Regel nur die untere Schicht der Wolken erfassen können, liefern die Wetterradare von Flugzeugen auch Wetterinformationen über höhere Schichten. Weiterhin stehen aufgrund der Flugbewegungen der einzelnen Flugzeuge sowie der hohen Anzahl an gleichzeitig in der Luft befindlichen Flugzeugen sehr viele zusätzliche Wetterdaten mit entsprechend hoher räumlicher und zeitlicher Auflösung zur Verfügung. Dies ermöglicht dann die Erstellung von Wettervorhersagen, insbesondere der Vorhersage von schweren Niederschlägen, mit deutlich höherer räumlicher und zeitlicher Genauigkeit.

Wetterradargeräte von Verkehrsflugzeugen sind dazu ausgeführt, Daten über Niederschläge und Eis-Teilchen zu liefern und eine Vorhersage über Turbulenzen zu ermöglichen, indem die Bewegung von Wolken durch Dopplerradar beobachtet wird. Je nach Art des Verkehrsflugzeuges werden durch die jeweiligen Wetterradargeräte Daten in unterschiedlichen Flughöhen ermittelt. So fliegen Motorflugzeuge in der Regel unterhalb von 4000 m, Turboprop-Flugzeuge auf einer mittleren Höhe von 6000 m und Düsenflugzeuge auf einer durchschnittlichen Höhe von 11000 m, so dass Wetterdaten aus all diesen Flughöhen erfasst werden und für lokale Wettervorhersagen genutzt werden können.

Vorzugsweise werden beim vorgeschlagenen Verfahren nicht die Rohdaten der Radarmessungen der Wetterradargeräte an die Bodenstation übermittelt. Vielmehr werden diese Rohdaten zunächst in dem jeweiligen Flugzeug verarbeitet bzw. ausgewertet, um eine geringere Datenmenge zu erhalten und als Wetterdaten an die Bodenstation(en) zu übermitteln. Dies kann bspw. in Form eines Datensatzes erfolgen, in dem die beobachtete Wettersituation beschrieben ist und der auch die Orts- und Zeitinformation der Beobachtung bzw. Messung sowie optional zusätzliche Daten über das Wetterradargerät enthält. Das Flugzeug muss daher eine Verarbeitungseinheit aufweisen, die aus den Rohdaten der jeweiligen Messung den entsprechenden Datensatz erstellt. Auch zusätzliche Wetterinformationen, die von einem Messgerät im Flugzeug aufgezeichnet wurden, bspw. Temperaturinformation, kann zusätzlich oder in dem obigen Datensatz an die Bodenstation(en) übermittelt werden. Vorzugsweise werden die jeweils übermittelten Wetterdaten bzw. Datensätze dann in einem oder mehreren Datenzentren gespeichert, von denen sie jederzeit von Teilnehmern, die über eine entsprechend Berechtigung verfügen, für eine Wettervorhersage abgerufen werden können. Der Zugang zu den Daten kann beispielsweise gegen Entgelt bereitgestellt werden.

In einer vorteilhaften Ausgestaltung werden die Wetterdaten von den Verkehrsflugzeugen über ein Internet-Gateway an die Bodenstation(en) übermittelt. Jedes Flugzeug, das über das Meer fliegt, ist prinzipiell mit einem Internet-Gateway ausgestattet, welches die Kommunikation über Satellit zwischen den Flugzeugen ermöglicht. Beispielweise gibt es bei Flugrouten über dem Meer nicht mehr die Möglichkeit, über Direktfunk zwischen der Flugsicherung und dem Flugzeug zu kommunizieren, sondern lediglich über Satelliten bzw. ein Internet-Gateway, weshalb es für jedes Flugzeug erforderlich ist. Die Nutzung eines Internet-Gateways bietet auch den Vorteil, dass die Verbindung bei Bedarf über ein oder mehrere Satelliten zur jeweiligen Bodenstation erfolgen kann, bspw. bei Flügen über dem Meer. Es besteht je nach Ausstattung der Verkehrsflugzeuge natürlich auch die Möglichkeit, die Wetterdaten über eine geeignete direkte Funkverbindung mit in der Nähe befindlichen Bodenstationen auszutauschen. In gleicher Weise, also via Internet-Gateway oder direkte Funkverbindung, können den Verkehrsflugzeugen auch von den Bodenstationen Wetterinformationen übermittelt werden, die für ihre Flugroute relevant sind.

Vorzugsweise werden in den Datenzentren, in denen die Wetterdaten gesammelt werden, vorab Informationen über alle Wetterradargeräte gespeichert, die an dem vorliegenden Netzwerk teilnehmen und deren Wetterdaten von den Verkehrsflugzeugen übermittelt werden. Diese Informationen umfassen wenigstens eine Geräte-ID und Messcharakteristiken des jeweiligen Wetterradargerätes. Die Wetterdaten von den Wetterradargeräten der Verkehrsflugzeuge werden dann zusammen mit der jeweiligen Geräte-ID übermittelt, die vorzugsweise in dem oben beschriebenen Datensatz enthalten ist. Auf diese Weise können für die erhaltenen Wetterdaten über die Geräte-ID jeweils die Messcharakteristiken abgerufen und für die Bewertung bzw. weitere Auswertung der Wetterdaten verwendet werden.

Als Wetterdaten werden vorzugsweise wenigstens der Entfernungsbereich der Messung, die Reflektivität des gemessenen Phänomens, die Geschwindigkeit der vertikalen und der horizontalen Bewegung des Phänomens, sowie die Höhe des Phänomens übermittelt. Anhand der Reflektivität kann auch beurteilt werden, ob und zu welchem Teil eine Wolke aus Regentropfen, Schnee oder Eis besteht.

In einer vorteilhaften Ausgestaltung werden die Wetterradargeräte der Verkehrsflugzeuge so betrieben, dass auch Vogelschwärme und/oder in der Nähe befindliche Flugzeuge detektiert werden. Diese zusätzlichen Daten können dann ebenfalls an die Bodenstation(en) übermittelt und über die Bodenstation(en) jeweils anderen Flugzeugen zur Verfügung gestellt werden. Weiterhin besteht auch die Möglichkeit, die Wetterdaten und ggf. die weiteren Informationen über Vogelschwärme und/oder in der Nähe befindliche Flugzeuge direkt an in der Nähe befindliche Flugzeuge, vorzugsweise über ein Internet-Gateway, zu übermitteln.

Die von den Verkehrsflugzeugen an die jeweiligen Bodenstationen übermittelten Wetterdaten können auch genutzt werden, um Wettervorhersagen in Ländern zu erstellen, die nicht über bodengestützte Wetterradarsysteme verfügen. Die dort verantwortlichen Einrichtungen zur Wettervorhersage können dann alleine auf Basis der von den Verkehrsflugzeugen übermittelten Daten Wettervorhersagen erstellen. Weiterhin besteht selbstverständlich auch die Möglichkeit, zusätzlich auch Wetterinformationen von satellitengestützten Wetterradargeräten und/oder von Wetterradargeräten auf Schiffen zu sammeln und für die Wettervorhersagen zu nutzen.

### Kurze Beschreibung der Zeichnungen

Das vorgeschlagene Verfahren wird nachfolgend anhand von Ausführungsbeispielen in Verbindung mit den Zeichnungen nochmals näher erläutert. Hierbei zeigen:
- Fig. 1: eine schematische Darstellung der unterschiedlichen Beobachtungspunkte von Wetterradargeräten am Boden, auf Satelliten und in Flugzeugen;
- Fig. 2: ein Beispiel für die Datenkommunikation der Wetterdaten von unterschiedlichen Informationsquellen gemäß dem vorgeschlagenen Verfahren; und
- Fig. 3: eine schematische Darstellung des Datenaustausches zwischen unterschiedlichen Datenzentren, bspw. unterschiedlicher Länder.

### Wege zur Ausführung der Erfindung

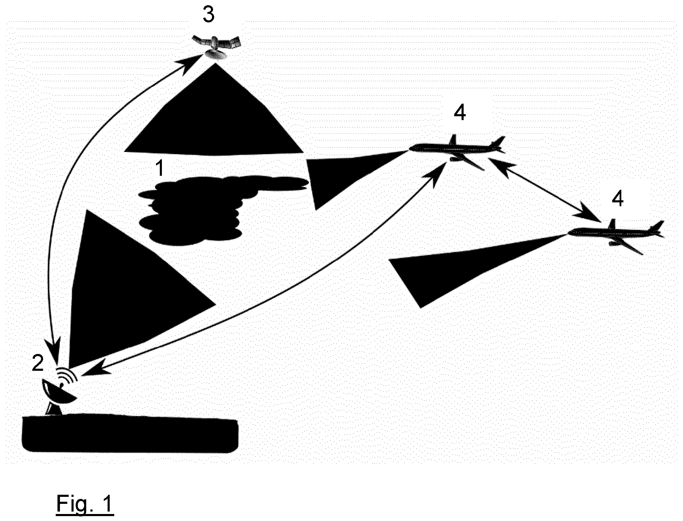

Bei dem vorgeschlagenen Verfahren werden die mit Wetterradargeräten von Verkehrsflugzeugen während des Fluges erfassten Wetterdaten über eine Datenverbindung an eine oder mehrere Bodenstationen übermittelt, die diese Wetterdaten dann dem lokalen Wetterdienst für eine lokale Wettervorhersage zur Verfügung stellt. In der Regel ergänzen diese Wetterdaten dann die von bodengestützten Wetterradargeräten und ggf. satellitengestützten Wetterradargeräten erhaltenen Wetterdaten. Durch diese Vielzahl an zusätzlichen Daten kann die Wettervorhersage dann mit deutlich höherer räumlicher und zeitlicher Auflösung erstellt werden. So bewegten sich bspw. 2017 pro Tag ca. 8800 Flugzeuge im deutschen Luftraum. Würden alle diese Flugzeuge die mit ihrem Wetterradargerät während des Flugs erhaltenen Wetterdaten übermitteln, ergäbe das eine um das ca. Fünfhundertfache gesteigerte Datenmenge im Vergleich zu den derzeit verfügbaren 17 bodenbasierten Wetterradargeräten in Deutschland. Zudem erfassen Verkehrsflugzeuge andere Wolkenschichten als bodenbasierte Wetterradargeräte, wie dies bspw. anhand der Figur 1 veranschaulicht ist. Diese zeigt die unterschiedlichen Beobachtungspunkte an einer vertikal geschichteten Wolke 1. Cumulus- oder Cumulonimbus-Wolken sind aus drei übereinanderliegenden Schichten gebildet. Die untere Schicht enthält Wasser und hat eine hohe Reflektivität. Die mittlere Schicht enthält Eis, weist eine mittlere Reflektivität auf und stellt den gefährlichsten Teil der Wolke dar. Die obere Schicht enthält Turbulenzen und zeigt die Bewegungsrichtung der Wolke. Der Wassergehalt der oberen Schicht ist niedrig, so dass diese eine niedrige Reflektivität aufweist. Wie aus Figur 1 zu erkennen ist, erfassen bodengestützte Radare 2 in der Regel nur die untere Schicht einer derartigen Wolke 1. Satellitengestützte Radare 3 erfassen die Wolke durch die obere Schicht hindurch. Mit den Wetterradargeräten in Verkehrsflugzeugen 4 werden je nach Höhe die mittlere und/oder obere Schicht der Wolke erfasst, wie dies in der Figur 1 angedeutet ist.

Die Wetterdaten von den Verkehrsflugzeugen werden dabei vorzugsweise von den jeweiligen Bodenstationen an ein in dem jeweiligen Land zentrales Datenzentrum übermittelt und dort gesammelt bzw. gespeichert. In diesem Datenzentrum werden vorzugsweise auch die Eigenschaften bzw. Messcharakteristiken jedes am Netzwerk teilnehmenden Radargerätes permanent gespeichert. Diese Charakteristiken müssen daher nicht mit den Wetterdaten übermittelt werden. Die gespeicherten Eigenschaften bzw. Messcharakteristiken umfassen dabei vorzugsweise:
- Geräte-ID
- Hersteller und Modell des Gerätes
- Seriennummer
- Sendeleistung
- Empfangsempfindlichkeit
- Datum der letzten Kalibrierung
- Antennencharakteristiken
- Richtcharakteristik und Gewinn der Antenne
- Strahlungsmuster der Antenne (Strahlbreite und Nebenkeulenpegel)
- Software-Version.

Diese dauerhaft gespeicherten Daten können auch von den beteiligten Einheiten, also Flugzeugen, bodengestützten Radarsystemen oder auch Schiffen jederzeit angefordert und abgerufen werden.

Die Rohdaten des jeweiligen im Flugzeug genutzten Wetterradargerätes werden im Flugzeug vorzugsweise geeignet vorverarbeitet, um einen Datensatz zur Beschreibung der Wettersituation und Implementierung entsprechend weiterer Informationen zu generieren. Dieser Datensatz weist dann gegenüber den Rohdaten eine deutlich geringere Datenmenge auf, die sich schneller übertragen lässt. Die Information in diesem Datensatz enthält vorzugsweise die folgenden Informationen:
- Geräte-ID (des messenden Wetterradargerätes)
- Beobachtungsnummer (um wiederholte oder fragmentierte Übertragungen nachverfolgen zu können)
- Beobachtungszeit (UTC)
- Entfernung [m]
- Horizontale Reflektivität [dBm]
- Vertikale Reflektivität [dBm]
- Geschwindigkeit der vertikalen Entwicklung [m/s]
- Geschwindigkeit der horizontalen Entwicklung [m/s]
- Breitengrad
- Längengrad
- Höhe [m]
- gesendete Leistung
- Empfängergewinn
- Zuverlässigkeit der Messung [%]
- DOP-Wert (DOP: Dilution of Precision) des GPS

Die Zuverlässigkeit der Messung könnte man z.B. vom Signal-zu-Rauschverhältnis der empfangenen Signale ableiten. Außerdem könnte evtl. noch der aktuelle Kalibrationsstatus des Gerätes mit einfließen.

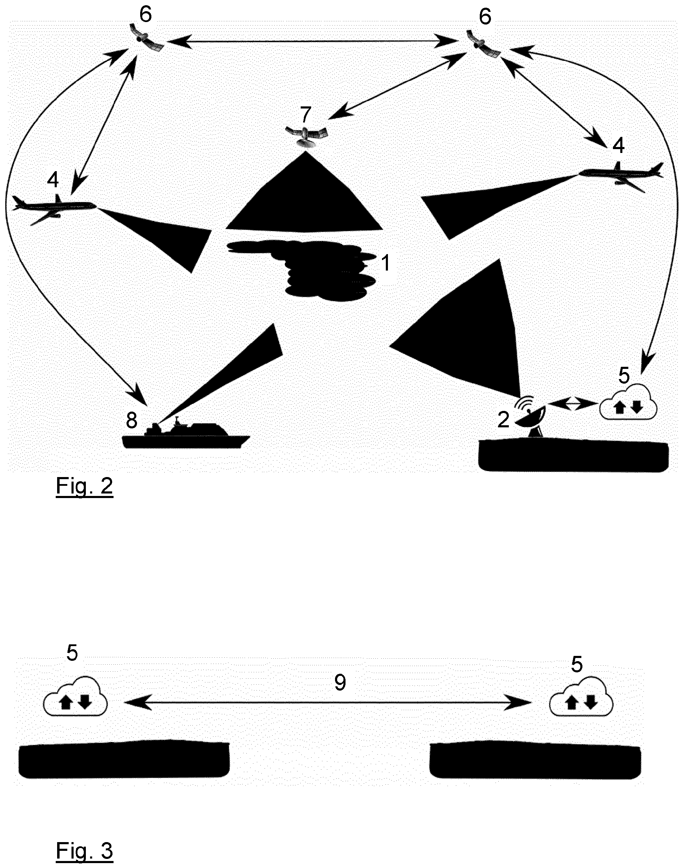

Dieser Datensatz wird von den Verkehrsflugzeugen 4 an eine oder mehrere Bodenstationen und von dort an ein zentrales Datenzentrum 5 übermittelt und dort gespeichert. Die Datenübertragung kann dabei je nach Position des jeweiligen Flugzeuges 4 auch über Kommunikationssatelliten 6 erfolgen. Figur 2 zeigt hierbei ein Beispiel, bei dem die Wetterdaten von unterschiedlichen Quellen in einem zentralen Datenzentrum 5 gesammelt und gespeichert werden. Neben den Verkehrsflugzeugen 4 sind in diesem Beispiel als weitere Quellen auch ein Wettersatellit 7, ein Schiff 8 mit Wetterradar sowie ein bodengestütztes Radar 2 angedeutet. Es wird hierbei jeweils eine bidirektionale Kommunikation zwischen diesen einzelnen Quellen und dem zentralen Datenzentrum 5 eingerichtet. Die Verbindung zwischen dem zentralen Datenzentrum 5 und dem bodengestützten Radar 2 kann bspw. auch über geeignete Kabelverbindungen erfolgen. Durch ein derartiges Netzwerk stehen in der zentralen Datenstation 5 sehr viele Wetterdaten, dank der Verkehrsflugzeuge auch mit hoher zeitlicher und räumlicher Auflösung zur Verfügung, aus denen dann eine lokale Wettervorhersage mit höherer räumlicher und zeitlicher Auflösung erstellt werden kann.

Eine Datenverbindung zwischen den Datenzentren 5 unterschiedlicher Länder ermöglicht einen entsprechenden Datenaustausch 9, wie dies in Figur 3 schematisch angedeutet ist. Dadurch entfällt auch das Erfordernis von Wetterradaren mit großer Reichweite, da die Wetterdaten aus benachbarten Ländern auf diese Weise bereits zur Verfügung stehen. Auch Länder, die nicht über eigene bodengestützte Wetterradarstationen verfügen, können somit von diesen Wetterdaten profitieren.

Das vorliegende Verfahren bietet auch Vorteile für die Wettervorhersage auf Flugrouten einzelner Verkehrsflugzeuge, da diese auf Basis der in den zentralen Datenzentren vorliegenden Daten ebenfalls besser erstellt werden können. Insbesondere werden hier vorzugsweise auch Daten von Verkehrsflugzeugen gesammelt, die sich bspw. über dem Meer bewegen. Die darauf basierenden Wettervorhersagen können dann über die jeweilige Datenverbindung (z.B. SAT-COM) in Echtzeit an das Verkehrsflugzeug übermittelt werden, das auf einer bestimmten Flugroute unterwegs ist.

### Bezugszeichenliste

- 1: Wolke
- 2: bodengestütztes Radar
- 3: satellitengestütztes Radar
- 4: Verkehrsflugzeug
- 5: zentrales Datenzentrum
- 6: Kommunikationssatellit
- 7: Wettersatellit
- 8: Schiff
- 9: Datenaustausch

## Patentansprüche

1. Verfahren zur Erhöhung der Genauigkeit lokaler Wettervorhersagen, bei dem Wetterradargeräte in Verkehrsflugzeugen (4) während des Flugs betrieben werden, um in einer momentanen Umgebung des jeweiligen Verkehrsflugzeugs (4) Wetterdaten zu erhalten, die Wetterdaten zusammen mit einer Zeit- und Ortsinformation während des Flugs über eine Datenverbindung an eine oder mehrere Bodenstationen übermittelt und bei einer Erstellung der lokalen Wettervorhersagen genutzt werden.

2. Verfahren nach Anspruch 1,
**dadurch gekennzeichnet,**
**dass** Rohdaten von Radarmessungen der Wetterradargeräte in den Verkehrsflugzeugen (4) verarbeitet und/oder ausgewertet werden, um die Wetterdaten zu erhalten.

3. Verfahren nach Anspruch 1 oder 2,
**dadurch gekennzeichnet,**
**dass** die von den Verkehrsflugzeugen (4) übermittelten Wetterdaten zusammen mit der Zeit- und Ortsinformation in einem oder mehreren Datenzentren (5) gespeichert werden.

4. Verfahren nach einem der Ansprüche 1 bis 3,
**dadurch gekennzeichnet,**
**dass** die Datenverbindung bidirektional betrieben wird und die Verkehrsflugzeuge (4) für ihren Flug relevante Wettervorhersagen von der oder den Bodenstationen erhalten.

5. Verfahren nach einem der Ansprüche 1 bis 4,
**dadurch gekennzeichnet,**
**dass** in den Datenzentren (5) vorab Informationen über alle Wetterradargeräte gespeichert werden, deren Wetterdaten von den Verkehrsflugzeugen (4) übermittelt werden, wobei die Informationen wenigstens eine Geräte-ID und Messcharakteristiken des jeweiligen Wetterradargerätes umfassen, und die Wetterdaten zusammen mit der jeweiligen Geräte-ID von den Verkehrsflugzeugen (4) an die eine oder mehreren Bodenstationen übermittelt werden.

6. Verfahren nach einem der Ansprüche 1 bis 5,
**dadurch gekennzeichnet,**
**dass** als Wetterdaten vorzugsweise wenigstens folgende Daten übermittelt werden:
- Entfernungsbereich der Messung,
- Reflektivität eines Phänomens,
- Geschwindigkeit einer vertikalen Bewegung des Phänomens,
- Geschwindigkeit einer horizontalen Bewegung des Phänomens und
- Höhe des Phänomens.

7. Verfahren nach einem der Ansprüche 1 bis 6,
**dadurch gekennzeichnet,**
**dass** mit den Wetterradargeräten auch Vogelschwärme und/oder andere Flugzeuge detektiert und Informationen über detektierte Vogelschwärme und/oder andere Flugzeuge an die eine oder mehreren Bodenstationen übermittelt werden.

8. Verfahren nach Anspruch 7,
**dadurch gekennzeichnet,**
**dass** die Informationen über detektierte Vogelschwärme und/oder andere Flugzeuge von den Verkehrsflugzeugen (4) auch direkt an andere in der Nähe befindliche Flugzeuge übermittelt werden, mit denen eine direkte Datenverbindung möglich ist.

9. Verfahren nach einem der Ansprüche 1 bis 8,
**dadurch gekennzeichnet,**
**dass** die Wetterdaten von den Verkehrsflugzeugen (4) auch direkt an andere in der Nähe befindliche Flugzeuge übermittelt werden, mit denen eine direkte Datenverbindung möglich ist.
